# EUROPEAN PATENT APPLICATION

(11) **EP 4 241 634 A1**
(43) Date of publication of application: **13.09.2023**
(21) Application number: 21889259.4
(22) Date of filing: 05.11.2021
(51) Int. Cl.: A47J 43/00, A23P 30/00

(54) **FOOD PROCESSING DEVICE**

(30) Priority: 06.11.2020 JP 2020185999
(71) Applicant: Panasonic Intellectual Property Management Co., Ltd., Osaka-shi, Osaka 540-6207 (JP)
(72) Inventor: UKAI, Kunihiro, Osaka-shi, Osaka 540-6207 (JP); HASHIMOTO, Yasuhiro, Osaka-shi, Osaka 540-6207 (JP); INO, Daisuke, Osaka-shi, Osaka 540-6207 (JP)
(74) Representative: Eisenführ Speiser
(86) International application number: PCT/JP2021/040701
(87) International publication number: WO 2022/097707

(57) **Abstract**

A food processing device includes: a reaction vessel (1); a stirrer (2) including a stirring body (4) that rotates to stir a reaction product in the reaction vessel (1); and catalyst reactors (6). Each of the catalyst reactors includes a reaction tube (7) and a light source (8) disposed in the reaction tube. The reaction tube has an outer surface on which a photocatalyst is provided. The reaction tube transmits light emitted from the light source. The catalyst reactors are arranged around a rotating shaft (3). The light source includes light emitters (12) disposed at different positions. When viewed in an axial direction of the rotating shaft, the catalyst reactors have phases equal to each other. The phase of each of the catalyst reactors is a phase of a reference direction of the reaction tube of the catalyst reactor with respect to a straight line (L1) connecting centers of the rotating shaft and the reaction tube. When viewed in the axial direction of the rotating shaft, the reference direction of the reaction tube is a direction determined on the basis of a direction in which light is emitted from the light emitters disposed in the reaction tube and a positional relationship between the light emitters.

## Description

### Technical Field

The present disclosure relates to a food processing device.

### Background Art

PTL 1 describes a manufacturing method in which a photocatalyst is used in a process of manufacturing a food product to kill microorganisms in a brewed product at room temperature in an unheated condition.

### Citation List

### Patent Literature

PTL 1: Japanese Unexamined Patent Application Publication No. 2003-250514

### Summary of Invention

The device and the manufacturing method according to PTL 1 have room for improvement. For example, it is difficult to effectively reform a reaction product for a food product.

In light of the above-described circumstances, an aspect of the present disclosure provides a food processing device capable of effectively reforming a reaction product for a food product.

According to an aspect of the present disclosure, a food processing device includes: a reaction vessel having a space that receives a reaction product for a food product, the reaction product being in a liquid form; a stirrer including a stirring body that rotates to stir the reaction product in the reaction vessel; and catalyst reactors. Each of the catalyst reactors includes a reaction tube and a light source disposed in the reaction tube. The reaction tube has an outer surface on which a photocatalyst is provided. The reaction tube transmits light emitted from the light source. The catalyst reactors are arranged around a rotating shaft of the stirring body with intervals between the catalyst reactors. The light source includes light emitters disposed at different positions when viewed in an axial direction of the rotating shaft. When viewed in the axial direction of the rotating shaft, the catalyst reactors have phases equal to each other. The phase of each of the catalyst reactors is a phase of a reference direction of the reaction tube of the catalyst reactor with respect to a straight line connecting centers of the rotating shaft and the reaction tube. When viewed in the axial direction of the rotating shaft, the reference direction of the reaction tube is a direction determined on the basis of a direction in which light is emitted from the light emitters disposed in the reaction tube and a positional relationship between the light emitters.

The food processing device according to the aspect of the present disclosure is capable of effectively reforming the reaction product for the food product.

### Brief Description of Drawings

[Fig. 1] Fig. 1 illustrates an example of a food processing device according to an embodiment.
[Fig. 2] Fig. 2 illustrates an example of the structure of a catalyst reactor according to the embodiment.
[Fig. 3] Fig. 3 illustrates the structure of a fixer.
[Fig. 4] Fig. 4 is a block diagram of the food processing device according to the embodiment.
[Fig. 5] Fig. 5 is a flowchart of an example of a method for operating the food processing device according to the embodiment.
[Fig. 6] Fig. 6 is a sectional view of the food processing device illustrated in Fig. 1 taken along line VI-VI.
[Fig. 7] Fig. 7 illustrates the relationship between the flow of a reaction product around each catalyst reactor and light quantity distribution in Fig. 6.
[Fig. 8] Fig. 8 is a sectional view of a food processing device according to a first modification that corresponds to the sectional view taken along line VI-VI in Fig. 1.
[Fig. 9] Fig. 9 illustrates the relationship between the flow of the reaction product around each catalyst reactor and light quantity distribution in Fig. 8.
[Fig. 10] Fig. 10 is a sectional view of a food processing device according to a second modification that corresponds to the sectional view taken along line VI-VI in Fig. 1.
[Fig. 11] Fig. 11 illustrates the relationship between the flow of the reaction product around each catalyst reactor and light quantity distribution in Fig. 10.
[Fig. 12] Fig. 12 is a sectional view of a food processing device according to a third modification that corresponds to the sectional view taken along line VI-VI in Fig. 1.
[Fig. 13] Fig. 13 illustrates the relationship between the flow of the reaction product around each catalyst reactor and light quantity distribution in Fig. 12.
[Fig. 14] Fig. 14 is a sectional view of a food processing device according to a fourth modification that corresponds to the sectional view taken along line VI-VI in Fig. 1.
[Fig. 15] Fig. 15 illustrates the relationship between the flow of the reaction product around each catalyst reactor and light quantity distribution in Fig. 14.
[Fig. 16] Fig. 16 is a sectional view of a food processing device according to a fifth modification that corresponds to the sectional view taken along line VI-VI in Fig. 1. Description of Embodiments

### (Underlying Knowledge Forming Basis of the Present Disclosure)

The inventors of the present disclosure have found that the device or method for manufacturing a food product described above in the "Background Art" section have the following problems.

In the manufacture of a food product, reforming of a raw material for the food product is often performed for the purpose of, for example, increasing the manufacturing efficiency and contents of nutritional components.

The raw material for the food product may be reformed by, for example, using a catalyst. In the manufacture of margarine, for example, a nickel catalyst may be used to hydrogenate oil and fat components, which are raw materials. Another example of a catalyst used in the manufacture of a food product is an immobilized enzyme.

The catalyst may also be used for the purpose of sterilization in the manufacturing process instead of reforming of the raw material for the food product. For example, PTL 1 describes a manufacturing method in which a photocatalyst is used in a process of manufacturing a food product to kill microorganisms in a brewed product at room temperature in an unheated condition.

In the known method using the catalyst, the catalytic activity may be reduced (catalyst may be degraded) as the raw material for the food product is reformed, and there is a possibility that the expected reactivity cannot be obtained. For example, also in a device for use in the manufacturing method in which the photocatalyst is used for the purpose of sterilization, appropriate sterilization characteristics cannot be obtained when the catalytic activity is reduced.

When the size of the device is increased for mass manufacturing of the food product, it is also necessary to increase the capacity of the catalyst reactor for promoting the reaction with the catalyst. For example, in a case where multiple catalyst reactors are used to increase the capacity, expected reactivity cannot be obtained when the catalytic activity differs between the catalyst reactors. This leads to a reduction in the overall catalytic activity, and frequent maintenance is required. Thus, the method in which the photocatalyst is used to reform the raw material for the food product has room for improvement in terms of energy efficiency, maintenance of the catalytic activity, and ease of maintenance.

In light of the above-described circumstances, an aspect of the present disclosure newly provides a food processing device in which a photocatalyst is used to reform a raw material for a food product.

According to an aspect of the present disclosure, a food processing device includes: a reaction vessel having a space that receives a reaction product for a food product, the reaction product being in a liquid form; a stirrer including a stirring body that rotates to stir the reaction product in the reaction vessel; and catalyst reactors. Each of the catalyst reactors includes a reaction tube and a light source disposed in the reaction tube. The reaction tube has an outer surface on which a photocatalyst is provided. The reaction tube transmits light emitted from the light source. The catalyst reactors are arranged around a rotating shaft of the stirring body with intervals between the catalyst reactors. The light source includes light emitters disposed at different positions when viewed in an axial direction of the rotating shaft. When viewed in the axial direction of the rotating shaft, the catalyst reactors have phases equal to each other. The phase of each of the catalyst reactors is a phase of a reference direction of the reaction tube of the catalyst reactor with respect to a straight line connecting centers of the rotating shaft and the reaction tube. When viewed in the axial direction of the rotating shaft, the reference direction of the reaction tube is a direction determined on the basis of a direction in which light is emitted from the light emitters disposed in the reaction tube and a positional relationship between the light emitters.

Accordingly, when viewed in the axial direction of the rotating shaft, the light source is disposed in each reaction tube such that the reference direction of the reaction tube is at the same phase with respect to the straight line connecting the centers of the rotating shaft and the reaction tube. Accordingly, each catalyst reactor has the same light quantity distribution on the surface of the reaction tube, and also has the same distribution of the flow of the reaction product on the surface of the reaction tube. Therefore, each catalyst reactor causes reaction of the reaction product in the same manner. Since each catalyst reactor provides substantially the same opportunity for reaction, reduction in the catalytic activity occurs in a substantially similar manner in each catalyst reactor. Accordingly, the catalyst reactors can be subjected to maintenance at the same time. Thus, the food processing device can be stably operated, and the reaction product for the food product can be effectively reformed.

When viewed in the axial direction of the rotating shaft, the light source of each of the catalyst reactors may be disposed to emit light line-symmetrically about the straight line.

Accordingly, the light source can be disposed such that the distribution of the quantity of light from the light source on the surface of the reaction tube is line-symmetrical about the straight line connecting the centers of the rotating shaft and the reaction tube. Thus, when the reaction tube is divided into two portions along the straight line, a first portion and a second portion provide substantially the same opportunity to react with the reaction product. Accordingly, each catalyst reactor more effectively provides substantially the same opportunity for reaction.

When viewed in the axial direction of the rotating shaft, the light source of each of the catalyst reactors may be disposed closer to a location close to the rotating shaft on an inner wall of the reaction tube of the catalyst reactor than to a location far from the rotating shaft on the inner wall of the reaction tube of the catalyst reactor.

Accordingly, a quantity of light from the light source on the inner wall of the reaction tube is greater in a region close to the rotating shaft than in a region far from the rotating shaft. As a result, the amount of excitons that are generated is greater in the region close to the rotating shaft than in the region far from the rotating shaft. The possibility of contact with the reaction product is higher in the region close to the rotating shaft than in the region far from the rotating shaft. Therefore, when the light source is disposed in the reaction tube such that a large amount of excitons are generated in the region that is close to the rotating shaft and in which the possibility of contact with the reaction product is high, the generated excitons quickly react with the reaction product. Thus, the reaction of the reaction product can be effectively promoted.

The catalyst reactors may include first catalyst reactors arranged around the rotating shaft with intervals between the first catalyst reactors and second catalyst reactors arranged around the first catalyst reactors with intervals between the second catalyst reactors.

Accordingly, a large number of catalyst reactors can be arranged.

The first catalyst reactors may have phases equal to each other and to a first phase. The phase of each of the first catalyst reactors is a phase of the reference direction of the reaction tube of the first catalyst reactor with respect to the straight line connecting the centers of the rotating shaft and the reaction tube. The second catalyst reactors may have phases equal to each other and to a second phase. The phase of each of the second catalyst reactors is a phase of the reference direction of the reaction tube of the second catalyst reactor with respect to the straight line connecting the centers of the rotating shaft and the reaction tube. The first phase and the second phase may differ from each other.

Accordingly, each first catalyst reactor causes reaction of the reaction product in the same manner, and each second catalyst reactor causes reaction of the reaction product in the same manner.

The light source may be a fluorescent lamp including two glass tube bodies disposed to extend in a length direction of the reaction tube.

Accordingly, the light source may have a simple structure.

The light source may include light emission units, each of which includes light emitting diodes arranged in a length direction of the reaction tube. Each of the light emission units may be disposed to emit light toward an inner wall of the reaction tube.

Accordingly, the energy efficiency and durability of the light source can be increased.

The food processing device may further include a cooler that is disposed to surround the catalyst reactors and cools the reaction product in the reaction vessel.

Accordingly, a temperature increase of the reaction product due to the reaction of the reaction product or heat generated by the light source can be reduced.

Each of the catalyst reactors includes a fixer disposed between the light source and a bottom portion of the reaction tube, the fixer fixing the light source to the bottom portion of the reaction tube.

Accordingly, the light source can be fixed to the reaction tube in a stable manner, and is therefore not easily displaced with respect to the reaction tube. Accordingly, the light quantity distribution on the surface of each reaction tube can be maintained at a predetermined position on the reaction tube. This enables each catalyst reactor to cause reaction of the reaction product in the same manner.

### (Embodiment)

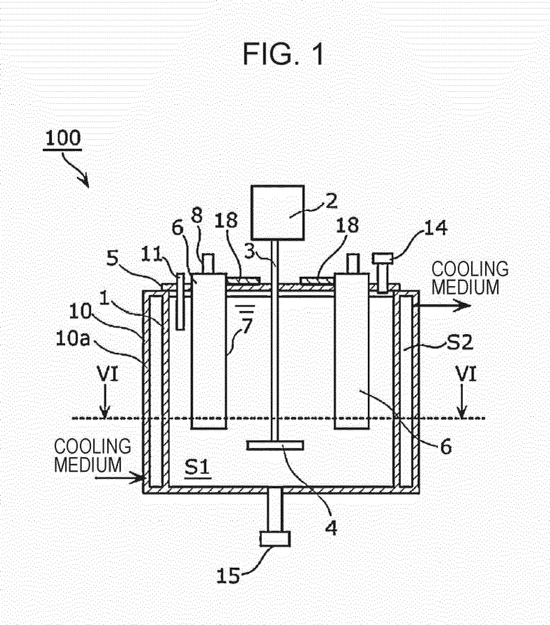

The structure of a food processing device 100 will be described with respect to Fig. 1. Fig. 1 illustrates an example of the food processing device 100 according to the embodiment.

As illustrated in Fig. 1, the food processing device 100 includes a reaction vessel 1, a stirrer 2, catalyst reactors 6, a cooler 10, a temperature detector 11, a controller 13, a water supplier 14, and a discharger 15.

The reaction vessel 1 has a first space S1 for receiving a reaction product for a food product, the reaction product being in a liquid form. The reaction vessel 1 is, for example, a container having a cylindrical shape with a bottom. The reaction vessel 1 may be any container having a tubular shape with a bottom and having the first space S1 for receiving the reaction product in a liquid form, and the shape thereof is not limited to a cylindrical shape. The reaction vessel 1 has a lid 5 that blocks an opening at the top of the reaction vessel 1. The lid 5 is a disc-shaped member, and has through holes through which a rotating shaft 3 of a stirring body 4, the catalyst reactors 6, and the temperature detector 11 extend.

The stirrer 2 includes the stirring body 4 that rotates to stir the reaction product in the reaction vessel 1. The stirrer 2 is positioned such that the rotating shaft 3 thereof extends along a central axis of the reaction vessel 1 having the cylindrical shape. The stirrer 2 includes a motor (not illustrated) that rotates the rotating shaft 3.

The stirring body 4 will be further described.

The stirring body 4 may include, for example, inclined paddle blades. The stirring body 4 may include propeller blades, disc turbine blades, or a centrifugal stirring body in accordance with the operation processing conditions, such as the viscosity of the reaction product and the electric power consumption of the stirrer 2, to optimize the processing conditions. When the food processing device 100 includes more than one stirring bodies 4, each stirring body 4 at least includes inclined paddle blades, propeller blades, disc turbine blades, or a centrifugal stirring body.

The food processing device 100 includes more than one catalyst reactors 6. The catalyst reactors 6 (six catalyst reactors 6 in the present embodiment) are arranged around the rotating shaft 3 of the stirring body 4 with intervals therebetween when viewed in an axial direction of the rotating shaft 3 of the stirring body 4. The six catalyst reactors 6 are surrounded by an inner wall surface of the reaction vessel 1. In other words, the catalyst reactors 6 are disposed in the first space S1 in the reaction vessel 1. Accordingly, when the stirrer 2 stirs the reaction product in the reaction vessel 1, the stirred reaction product can move between the catalyst reactors 6.

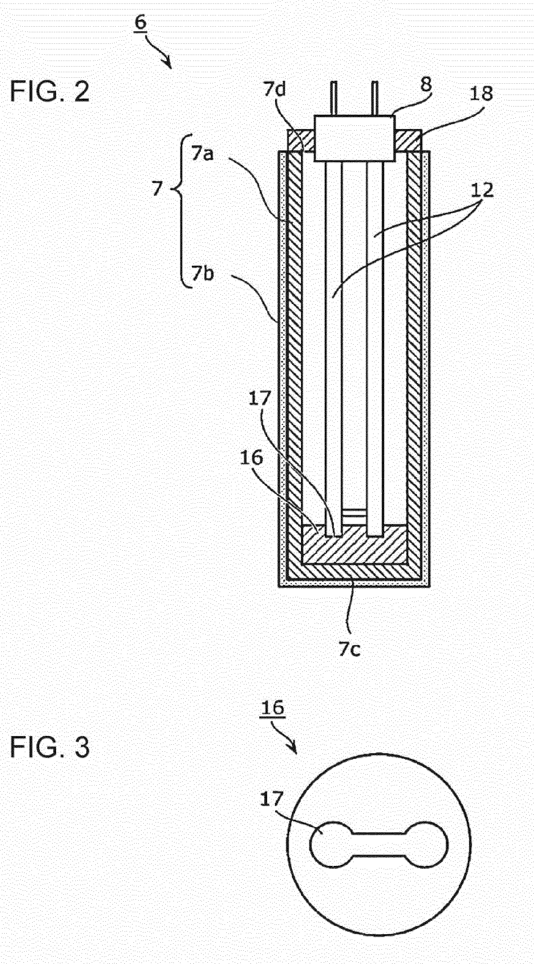

The structure of each catalyst reactor 6 will be described in detail with reference to Fig. 2. Fig. 2 illustrates an example of the structure of each catalyst reactor 6 according to the embodiment.

As illustrated in Fig. 2, each catalyst reactor 6 includes a reaction tube 7 and a light source 8. The catalyst reactor 6 may also include a sealing portion 18 that seals the gap between the light source 8 and an opening portion 7d of the reaction tube 7. The reaction tube 7 has a bottom portion 7c at one end and the opening portion 7d at the opposite end (other end). The reaction tube 7 may be filled with dry gas.

The reaction tube 7 includes an outer surface on which a photocatalyst is provided and the bottom portion 7c sealed at one end thereof. The reaction tube 7 transmits light. More specifically, the reaction tube 7 includes a glass base 7a having a cylindrical shape with a bottom and a photocatalyst thin film 7b provided on an outer surface of the glass base 7a. The glass base 7a is oriented such that an axial direction of the glass base 7a having the cylindrical shape extends along the rotating shaft 3 of the stirring body 4. Thus, the reaction tube 7 is disposed substantially parallel to the rotating shaft 3.

The photocatalyst thin film 7b is formed on the outer surface of the glass base 7a by, for example, a general sol-gel process. More specifically, the photocatalyst thin film 7b is made of TiO2. Sol-gel liquid used in the method of forming the photocatalyst thin film 7b is applied to the outer surface of the glass base 7a, and the glass base 7a having the sol-gel liquid applied thereto is rotated by using a rotator. Thus, the sol-gel liquid is uniformly applied over the entire outer surface of the glass base 7a. After the sol-gel liquid applied to the glass base 7a is dry, the glass base 7a is dried in an electric furnace, and then heated at a high temperature of greater than or equal to 500°C. Thus, the photocatalyst thin film 7b is formed on the outer surface of the glass base 7a.

The light source 8 emits light from the inside of the reaction tube 7 to irradiate the photocatalyst provided on the outer surface of the reaction tube 7. The light source 8 is inserted into the glass base 7a through an open portion of the glass base 7a at an end opposite to the end at which the bottom portion 7c is provided. More specifically, the light source 8 includes a light source that emits light having a central wavelength of about 260 nm to about 400 nm so that excitons can be effectively generated in the photocatalyst. The light source 8 includes, for example, a fluorescent lamp that emits light having a center wavelength in an ultraviolet wavelength range of 315 nm to 400 nm (UV-A). Accordingly, the reaction of the reaction product can be effectively promoted by the photocatalyst.

The light source 8 may be disposed to face the thin film 7b on the outer surface of the reaction tube 7 to effectively irradiate the thin film 7b on the outer surface of the glass base 7a with light. The light source 8 is disposed substantially parallel to the length direction of the reaction tube 7, and includes two light emitters 12 including two straight tube fluorescent lamps that emit light toward the inner surface of the reaction tube 7. The fluorescent lamps include two glass tube bodies disposed to extend in the length direction of the reaction tube 7. In other words, the light source 8 includes the light emitters 12 disposed at different positions when viewed in the axial direction of the rotating shaft 3.

The two light emitters 12 are electrically connected to each other at a position closer to the bottom portion 7c than to the opening portion 7d of the reaction tube 7. Accordingly, the electric power of the light source 8 can be shared from one direction of the other open portion of the reaction tube 7.

Each of the catalyst reactors 6 may further include a fixer 16 disposed between the light source 8 and the bottom portion 7c of the reaction tube 7. The fixer 16 fixes the light source 8 to the bottom portion 7c of the reaction tube 7. As illustrated in Fig. 3, the fixer 16 has a fixing recess 17 to which a bottom portion 7c of the light source 8 are fitted, and is shaped to fit the bottom portion 7c of the reaction tube 7. The outer periphery of the fixer 16 is fitted to the bottom portion 7c of the reaction tube 7, and the bottom portion of the light source 8 is fitted to the fixing recess 17. Thus, the light source 8 is fixed to the bottom portion 7c of the reaction tube 7.

Thus, the light source 8 is fixed in the reaction tube 7 in a state such that the light source 8 faces the photocatalyst thin film 7b. Accordingly, the photocatalyst thin film 7b can be effectively irradiated with light.

The light source 8 may include, for example, a high-pressure mercury lamp or a light emitting diode (LED) that emits ultraviolet rays. The LED has a high luminous efficiency and generate a relatively small amount of heat. Therefore, the amount of convection generated in the reaction tube 7 can be reduced compared to when a light source that generates a large amount of heat is used. Accordingly, introduction of outside air into the reaction tube 7 can be reduced.

The cooler 10 cools the reaction product in the reaction vessel 1. The cooler 10 is disposed to surround the catalyst reactors 6. More specifically, the cooler 10 includes an outer wall 10a that surrounds the reaction vessel 1 and a cooling medium (refrigerant) that flows through a second space S2 between the reaction vessel 1 and the outer wall 10a.

The cooler 10 operates based on the temperature detected by the temperature detector 11 to adjust the temperature of the reaction product. More specifically, when the reaction product is to be cooled from a temperature higher than a first temperature to the first temperature, the cooler 10 causes refrigerant at a temperature of less than or equal to the first temperature to flow through the second space S2. Thus, the cooler 10 cools the reaction product by causing the refrigerant and the reaction product to exchange heat through the reaction vessel 1. After the temperature of the refrigerant is increased as a result of heat exchange between the refrigerant and the reaction product, the refrigerant may, for example, be cooled to a temperature less than or equal to the first temperature by a heat exchanger (not illustrated) disposed outside the second space S2, and then returned to the second space S2 through a pipe (not illustrated). A circulation pump (not illustrated), for example, may be provided to circulate the refrigerant between the second space S2 and the above-described heat exchanger. In this case, the cooler 10 may start cooling the reaction product by starting the operation of the circulation pump.

The temperature detector 11 is disposed in the reaction vessel 1 and detects the temperature of the reaction product. The temperature detector 11 may include, for example, a thermistor or a thermocouple. The temperature detector 11 extends through the lid 5, and, for example, is fixed to the lid 5.

The water supplier 14 is disposed on the lid 5 and supplies water into the first space S1 of the reaction vessel 1. The water supplier 14 may include a water supply pipe through which water is supplied and a valve connected to the water supply pipe. The valve may be, for example, a solenoid valve or an electric valve that switches between a state (open state) in which water is supplied to the reaction vessel 1 through the pipe and a state (closed state) in which water is not supplied.

The discharger 15 is disposed on a bottom portion of the reaction vessel 1 and discharges the reaction product or water accumulated in the reaction vessel 1. The discharger 15 may include a valve, such as a solenoid valve or an electric valve, that is connected to an outlet (not illustrated) extending through the bottom portion of the reaction vessel 1 and that switches between a state (open state) in which the reaction product or water accumulated in the reaction vessel 1 is discharged through the outlet and a state (closed state) in which the reaction product or water is not discharged.

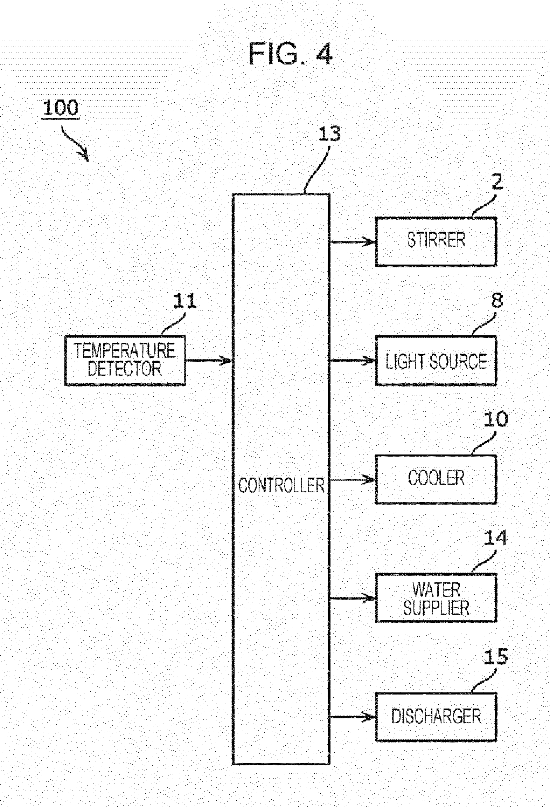

The controller 13 included in the food processing device 100 will now be described with reference to Fig. 4. Fig. 4 is a block diagram of the food processing device 100 according to the embodiment.

The controller 13 controls the operation of the food processing device 100. The controller 13 receives detection results obtained by the temperature detector 11, and controls at least one of the stirrer 2, the light source 8, the cooler 10, the water supplier 14, or the discharger 15 based on the received detection results. The controller 13 may be realized as, for example, a processor and a memory storing a program executed by the processor. The controller 13 may be realized as, for example, a dedicated circuit.

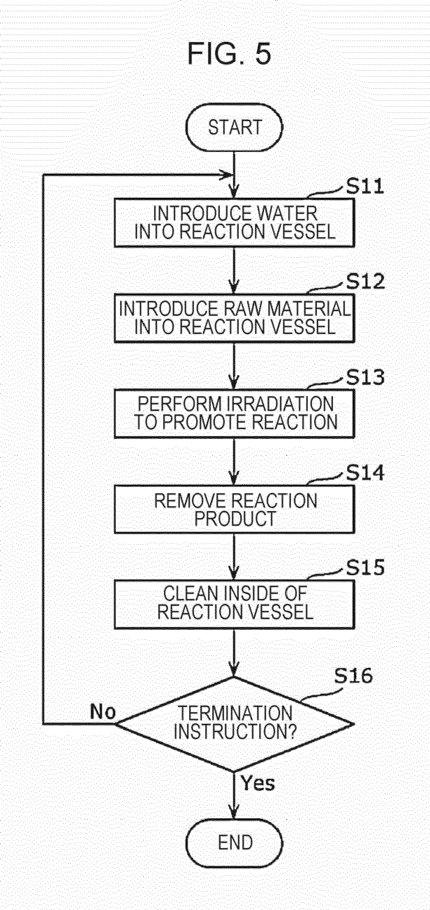

The operation of the food processing device 100 will now be described with reference to Fig. 5. Fig. 5 is a flowchart of an example of a method for operating the food processing device 100 according to the embodiment.

First, the controller 13 switches the water supplier 14 from a state in which the water supplier 14 does not supply water to a state in which the water supplier 14 supplies water, so that water is introduced into the reaction vessel 1 from the water supplier 14 (S 11: first introduction step). In the first introduction step, water may be manually introduced into the reaction vessel 1. When a predetermined amount of water is accumulated in the reaction vessel 1 in the first introduction step, the controller 13 switches the water supplier 14 to the state in which the water supplier 14 does not supply water.

Next, a raw material for the food product (hereinafter referred to as a raw material) is introduced into the reaction vessel 1 (S12: second introduction step). In the second introduction step, a predetermined amount of raw material may be automatically measured and introduced into the reaction vessel 1 by an introduction device, or be manually measured and introduced into the reaction vessel 1. The raw material is in a solid form, for example, a powder form.

In an introduction step including step S11 and step S12, step S12 may be performed prior to or at the same time as step S11. In the introduction step, a mixture of water and the raw material may be introduced into the reaction vessel 1.

When water and the raw material are introduced into the reaction vessel 1, the controller 13 may drive the stirrer 2 to stir the water and the raw material and form a mixture in a liquid form.

Next, the controller 13 turns on the light source 8 to start irradiation of the photocatalyst thin film 7b of the corresponding reaction tube 7 with light from the inside of the reaction tube 7 (S13: reaction step). In the reaction step, the thin film 7b on the outer surface of the reaction tube 7 is irradiated with light from the light source 8 while the introduced mixture is in contact therewith. Accordingly, reaction of the mixture is promoted. In the reaction step, the controller 13 drives the motor of the stirrer 2 to rotate the rotating shaft 3 of the stirring body 4, so that the reaction product in the reaction vessel 1 is stirred. In addition, in the reaction step, the controller 13 drives the circulation pump of the cooler 10 to supply the cooling medium to the second space S2 of the cooler 10.

At this time, the controller 13 causes the temperature detector 11 to detect the temperature of the reaction product, and adjusts the temperature and/or the amount of the cooling medium supplied to the second space S2 so that the temperature of the reaction product approaches a preset temperature. For example, the controller 13 adjusts the temperature of the cooling medium by adjusting the amount of heat exchanged by the heat exchanger installed outside the second space S2. More specifically, when the heat exchanger is an air-cooling heat exchanger, the controller 13 may adjust the temperature of the cooling medium by adjusting the flow rate of a fan that promotes air-cooling by the heat exchanger. When the heat exchanger is a water-cooling heat exchanger, the controller 13 may adjust the temperature of the cooling medium by adjusting the amount of water flowing from a pump that promotes water-cooling by the heat exchanger. The controller 13 may adjust the amount of cooling medium supplied to the second space by adjusting the amount of circulation by a circulation pump for circulating the cooling medium between the second space S2 outside the reaction vessel 1 and the heat exchanger. Thus, the temperature of the cooling medium and/or the amount of the cooling medium that is supplied can be adjusted by using, for example, a circulation device (not illustrated) including the heat exchanger, the circulation pump, and the pipe.

When, for example, the reaction of the reaction product in the food processing device 100 is fermentation by brewer's yeast, the temperature may be set to a low temperature (for example, about 5°C) for maturation. In this case, the preset target temperature for the cooler 10 is 5°C.

In the food processing device 100, the photocatalyst irradiated with light and the reaction product, which is the raw material for the food product, are brought into contact with each other so that the reaction product is reformed by the photocatalyst. For example, when a raw material for beer is reformed, the period of fermentation can be reduced by dissolving sugar in the wort in advance.

The controller 13 performs the reaction step for a preset reaction time to reform the mixture, and stops the operation of the reaction step when the reaction time is over. More specifically, the controller 13 turns off the light source 8, stops the motor of the stirrer 2, and stops the operation of the cooler 10.

Next, the controller 13 switches the discharger 15 from a state in which the discharger 15 does not discharge the reaction product to a state in which the discharger 15 discharges the reaction product, so that the reaction product including the mixture is removed from the reaction vessel 1 (S14: removing step).

Next, the controller 13 cleans the inside of the reaction vessel 1 with water (S15: cleaning step). In the present embodiment, the controller 13 switches the water supplier 14 from the state in which the water supplier 14 does not supply water to the state in which the water supplier 14 supplies water, so that water is introduced into the reaction vessel 1 from the water supplier 14. Then, the controller 13 operates the stirrer 2 while the reaction vessel 1 is filled with water, and thereby cleans the inside of the reaction vessel 1 with water. Thus, the reaction product adhering to the outer surface of the reaction tube 7 can be removed. Then, the controller 13 switches the discharger 15 from the state in which the discharger 15 does not discharge water to the state in which the discharger 15 discharges water, so that the water used in the cleaning process is removed from the reaction vessel 1.

When step S15 is finished, the controller 13 may determine whether a terminating instruction is issued (S16).

When it is determined that the terminating instruction is issued (Yes in S16), the controller 13 terminates the operation method. When it is determined that the terminating instruction is not issued (No in S16), the controller 13 returns to step S11 and repeats a group of steps including steps S11 to S15 as one cycle to proceed with the process of reforming the raw material for the food product. In other words, the controller 13 repeats the introduction step, the reaction step, the removing step, and the cleaning step until the terminating instruction is issued.

The reforming process performed at each catalyst reactor will now be described.

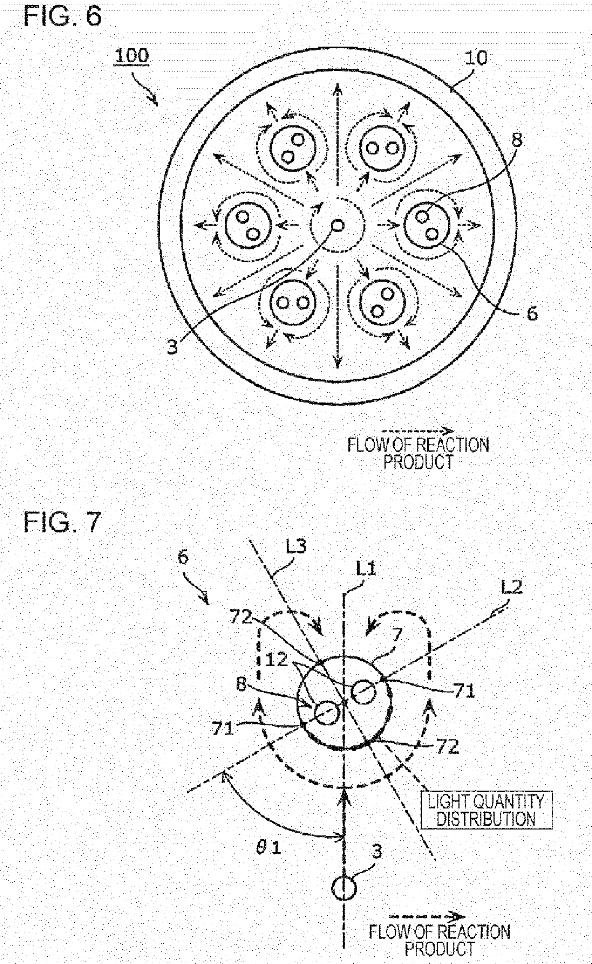

Fig. 6 is a sectional view of the food processing device illustrated in Fig. 1 taken along line VI-VI. Fig. 7 illustrates the relationship between the flow of the reaction product around each catalyst reactor and the light quantity distribution in Fig. 6.

In the reforming process, organic components of the raw material that has come into contact with the photocatalyst thin film 7b of each catalyst reactor 6 react with excitons generated in the thin film 7b by light emitted from the light source 8, and accordingly the reaction of reforming the raw material is promoted.

As illustrated in Fig. 6, when viewed in the axial direction of the rotating shaft 3, the catalyst reactors 6 are arranged to surround the stirring body 4 with the rotating shaft 3 at the center, and are evenly spaced from each other. Therefore, when the stirrer 2 is operated, the reaction product in the liquid form is substantially evenly supplied to the catalyst reactors 6. The generation of excitons is correlated with the quantity of light from the light source 8. Therefore, the distribution of the amount of excitons that are generated corresponds to the distribution of light quantity on the photocatalyst thin film 7b of each catalyst reactor 6. More specifically, the amount of excitons that are generated increases as the quantity of light from the light source 8 increases. Accordingly, the reaction of the raw material is more easily promoted in regions in which each catalyst reactor 6 receives a greater quantity of light from the light source 8.

When, for example, the light source includes a single light emitter and the light emitter is disposed at the center of the reaction tube, light is emitted radially toward the inner surface of the reaction tube 7 from the light emitter at the center, and the photocatalyst thin film 7b on the outer surface of the reaction tube 7 is substantially uniformly irradiated with light. More specifically, when the reaction tube 7 is viewed in the length direction of the reaction tube 7, the circumferential distribution of the quantity of light from the light source on the photocatalyst thin film 7b of the reaction tube 7 having a circular shape is such that the quantity of light is substantially constant at any position in the circumferential direction.

In contrast, in the food processing device 100 according to the present embodiment, the light source 8 includes two light emitters 12 extending in the length direction of the reaction tube 7 and facing the inner surface of the reaction tube 7. In this case, the distribution of the quantity of light with which the photocatalyst thin film 7b is irradiated is non-uniform depending on the positional relationship between the two light emitters 12 and the outer surface of the reaction tube 7. As illustrated in Fig. 7, the distance from the two light emitters 12 to points 71 at which a straight line L2 connecting the centers of the two light emitters 12 intersects the reaction tube 7 differs from the distance from the two light emitters 12 to points 72 at which a straight line L3 passing through the center of the reaction tube 7 and perpendicular to the straight line L2 intersects the reaction tube 7. Therefore, the quantity of light at the points 71 differs from the quantity of light at the points 72. More specifically, the distance from the two light emitters 12 to the points 71 is less than the distance from the two light emitters 12 to the points 72. Therefore, the quantity of light at the points 71 is greater than the quantity of light at the points 72. Thus, the light quantity distribution on the thin film 7b of the reaction tube 7 is such that the quantity of light varies along the circumferential direction.

As described above, the reaction product in the liquid form is substantially evenly supplied to the reaction tubes 7 of the catalyst reactors 6. Therefore, when the catalyst reactors 6 disposed in the reaction vessel 1 have the same light quantity distribution on the reaction tubes 7 thereof, the reaction between the excitons and the reaction product progresses substantially evenly at the catalyst reactors 6. When, for example, the reaction with the reaction product is substantially even, management control of side reactions caused by the reaction product after the reaction and the reactivity of the reaction product in each food processing device can be equalized by, for example, time management or input to the light source 8.

To realize the above-described arrangement, in the food processing device 100 according to the present embodiment, the catalyst reactors 6 are arranged so that the catalyst reactors 6 have the same distribution of reaction of the raw material. As illustrated in Figs. 6 and 7, when viewed in the axial direction of the rotating shaft 3, the catalyst reactors 6 are arranged to have phases equal to each other. The phase of each catalyst reactor 6 is a phase of a reference direction of the reaction tube 7 of the catalyst reactor 6 with respect to a straight line L1 connecting the centers of the rotating shaft 3 and the reaction tube 7. When viewed in the axial direction of the rotating shaft 3, the reference direction of the reaction tube 7 is a direction determined on the basis of the direction in which light is emitted from the light emitters 12 disposed in the reaction tube 7 and the positional relationship between the light emitters 12.

In the present embodiment, when viewed in the axial direction of the rotating shaft 3, the direction in which light is emitted from the light emitters 12 includes, for example, all radial directions over 360 degrees. When the direction in which light is emitted from the light emitters 12 includes all radial directions over 360 degrees, the reference direction of the reaction tube 7 may be a direction in which the straight line L2 connecting the centers of the light emitters 12 extends. Accordingly, in the present embodiment, as illustrated in Fig. 7, the phase of the reference direction of the reaction tube 7 with respect to the straight line L1 is an angle θ1 between the straight line L1 and the straight line L2. Thus, as illustrated in Fig. 7, the positional relationship between the rotating shaft 3 and the two light emitters 12 of the light source 8 included in each catalyst reactor 6 is the same for all of the reaction tubes 7 of the catalyst reactors 6.

When the direction in which light is emitted from the light emitters can be defined by a single direction, the reference direction of each reaction tube 7 may be defined as the direction in which light is emitted from one light emitter selected from the light emitters. In such a case, the one light emitter is selected from the light emitters based on the same criterion for all of the catalyst reactors. The criterion for selection may be the quantity of light that is emitted, the positional relationship between the light emitters, or the direction in which light is emitted.

In the food processing device 100 according to the present embodiment, when viewed in the axial direction of the rotating shaft 3, the light source 8 is disposed in each reaction tube 7 such that the reference direction of the reaction tube 7 is at the same phase with respect to the straight line L1 connecting the centers of the rotating shaft 3 and the reaction tube 7. Accordingly, each catalyst reactor 6 has the same light quantity distribution on the surface of the reaction tube 7, and also has the same distribution of the flow of the reaction product on the surface of the reaction tube 7. Therefore, each catalyst reactor 6 causes reaction of the reaction product in the same manner. Since each catalyst reactor 6 provides substantially the same opportunity for reaction, reduction in the catalytic activity occurs in a substantially similar manner in each catalyst reactor 6. Accordingly, the catalyst reactors 6 can be subjected to maintenance at the same time. Thus, the food processing device 100 can be stably operated, and the reaction product for the food product can be effectively reformed.

In the food processing device 100 according to the present embodiment, the light source 8 is a fluorescent lamp including two glass tube bodies disposed to extend in the length direction of the reaction tube 7. Therefore, the light source 8 may have a simple structure.

In the food processing device 100 according to the present embodiment, each of the catalyst reactors 6 includes the fixer 16 disposed between the light source 8 and the bottom portion 7c of the reaction tube 7. The fixer 16 fixes the light source 8 to the bottom portion 7c of the reaction tube 7. Thus, the light source 8 can be fixed to the reaction tube 7 in a stable manner, and is therefore not easily displaced with respect to the reaction tube 7. Accordingly, the light quantity distribution on the surface of each reaction tube 7 can be maintained at a predetermined position on the reaction tube 7. This enables each catalyst reactor 6 to cause reaction of the reaction product in the same manner.

### (First Modification)

A first modification will now be described.

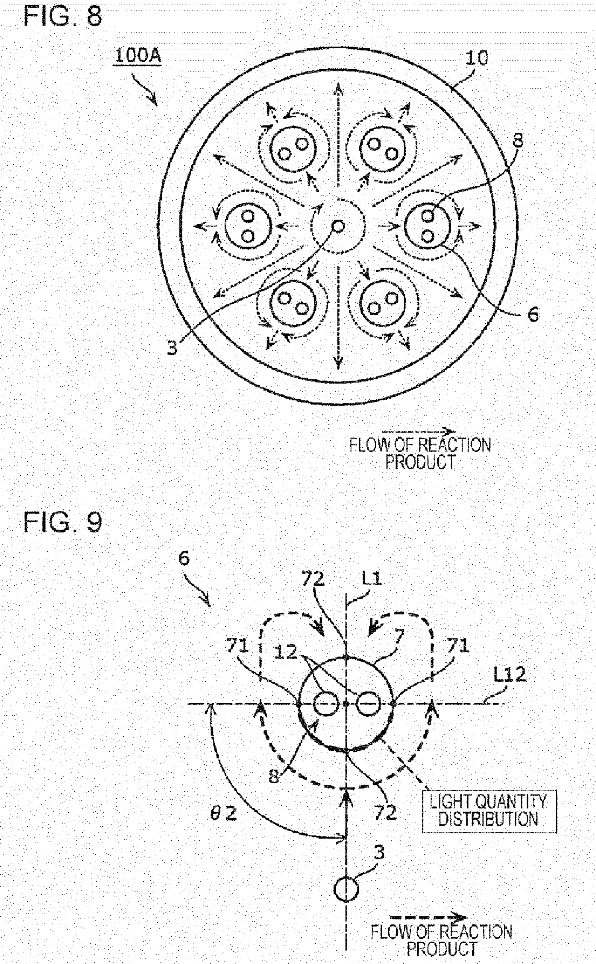

Fig. 8 is a sectional view of a food processing device according to a first modification that corresponds to the sectional view taken along line VI-VI in Fig. 1. Fig. 9 illustrates the relationship between the flow of the reaction product around each catalyst reactor and the light quantity distribution in Fig. 8.

In a food processing device 100A according to the first modification, when viewed in the axial direction of the rotating shaft 3, the light source 8 of each of the catalyst reactors 6 is disposed to emit light line-symmetrically about the straight line L1. More specifically, as illustrated in Fig. 9, the two light emitters 12 are arranged line-symmetrically about the straight line L1. In the first modification, the two light emitters 12 are arranged such that the straight line L1 is positioned between the two light emitters 12. In other words, in the first modification, as illustrated in Fig. 9, the phase of the reference direction of the reaction tube 7 with respect to the straight line L1 is an angle θ2 between the straight line L1 and a straight line L12 connecting the centers of the two light emitters 12, and the angle θ2 is 90 degrees.

Thus, the light source 8 can be disposed such that the distribution of the quantity of light from the light source 8 on the surface of the reaction tube 7 is line-symmetrical about the straight line L1 connecting the centers of the rotating shaft 3 and the reaction tube 7. Thus, when the reaction tube 7 is divided into two portions along the straight line L1, a first portion (left half in Fig. 9) and a second portion (right half in Fig. 9) provide substantially the same opportunity to react with the reaction product. Accordingly, each catalyst reactor more effectively provides substantially the same opportunity for reaction.

### (Second Modification)

A second modification will now be described.

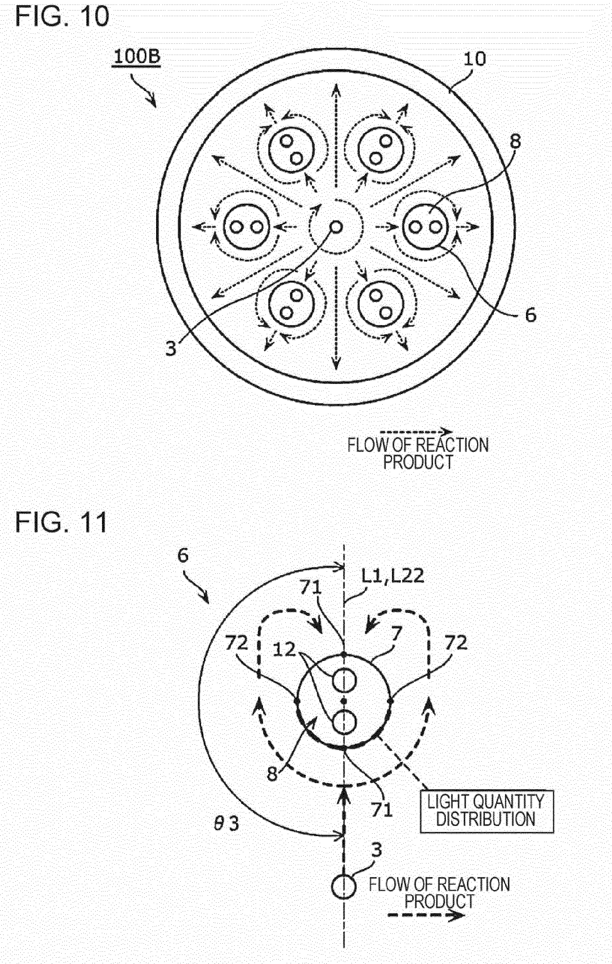

Fig. 10 is a sectional view of a food processing device according to a second modification that corresponds to the sectional view taken along line VI-VI in Fig. 1. Fig. 11 illustrates the relationship between the flow of the reaction product around each catalyst reactor and the light quantity distribution in Fig. 10.

In a food processing device 100B according to the second modification, similarly to the food processing device 100A according to the first modification, the light source 8 of each of the catalyst reactors 6 is disposed such that light is emitted line-symmetrically about the straight line L1 when viewed in the axial direction of the rotating shaft 3. More specifically, as illustrated in Fig. 11, the two light emitters 12 are arranged line-symmetrically about the straight line L1. In the second modification, the two light emitters 12 are arranged such that the centers thereof are on the straight line L1. In other words, in the second modification, as illustrated in Fig. 10, the phase of the reference direction of the reaction tube 7 with respect to the straight line L1 is an angle θ3 between the straight line L1 and a straight line L22 connecting the centers of the two light emitters 12, and the angle θ3 is 180 degrees.

Thus, the light source 8 can be disposed such that the distribution of the quantity of light from the light source 8 on the surface of the reaction tube 7 is line-symmetrical about the straight line L1 connecting the centers of the rotating shaft 3 and the reaction tube 7. Thus, when the reaction tube 7 is divided into two portions along the straight line L1, a first portion (left half in Fig. 11) and a second portion (right half in Fig. 11) provide substantially the same opportunity to react with the reaction product. Accordingly, each catalyst reactor more effectively provides substantially the same opportunity for reaction.

### (Third Modification)

A third modification will now be described.

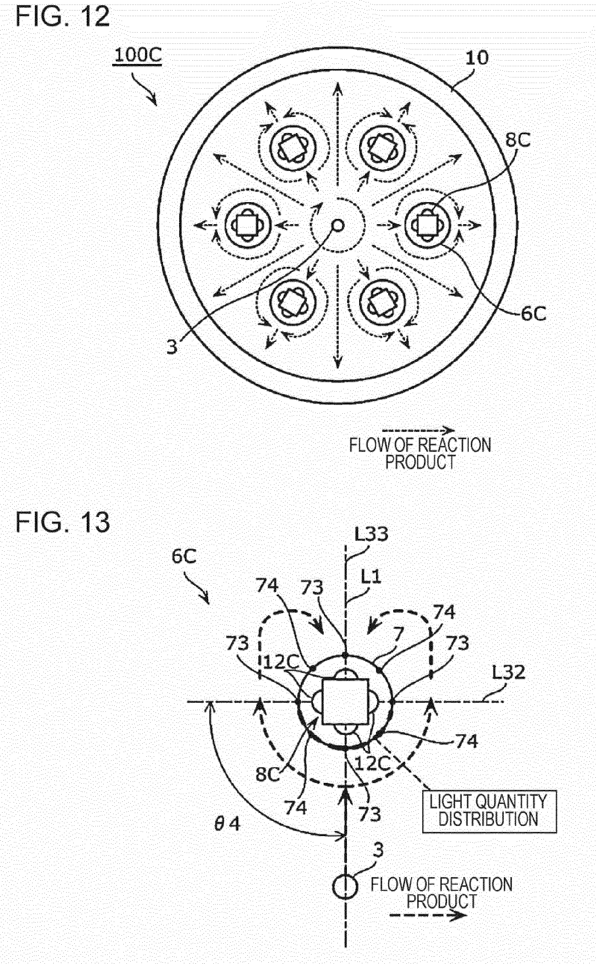

Fig. 12 is a sectional view of a food processing device according to a third modification that corresponds to the sectional view taken along line VI-VI in Fig. 1. Fig. 13 illustrates the relationship between the flow of the reaction product around each catalyst reactor and the light quantity distribution in Fig. 12.

In a food processing device 100C according to the third modification, each catalyst reactor 6C includes a light source 8C including light emitters (four light emitters in the present embodiment) 12C composed of light emission units. Each light emission unit includes light emitting diodes arranged in the length direction of the reaction tube 7. Each of the four light emitters 12C is disposed to emit light toward the inner wall of the reaction tube 7.

In the food processing device 100C according to the third modification, the light source 8C includes four light emitters 12C extending in the length direction of the reaction tube 7 and facing the inner surface of the reaction tube 7. Also in this case, the distribution of the quantity of light with which the photocatalyst thin film 7b is irradiated is non-uniform depending on the positional relationship between the four light emitters 12C and the outer surface of the reaction tube 7. As illustrated in Fig. 13, the distance from the four light emitters 12 to four points 73 at which straight lines L32 and L33 intersect the reaction tube 7 differs from the distance from the four light emitters 12 to four points 74 between the four points 73 on the reaction tube 7, each of the straight lines L32 and L33 connecting the centers of two of the four light emitters 12 that face each other. Therefore, the quantity of light at the points 73 differs from the quantity of light at the points 74. More specifically, the distance from the four light emitters 12 to the points 73 is less than the distance from the four light emitters 12 to the points 74. Therefore, the quantity of light at the points 73 is greater than the quantity of light at the points 74. Thus, the light quantity distribution on the thin film 7b of the reaction tube 7 is such that the quantity of light varies along the circumferential direction.

The catalyst reactors 6C are also arranged to have phases equal to each other. The phase of each catalyst reactor 6C is a phase of a reference direction of the reaction tube 7 of the catalyst reactor 6C with respect to the straight line L1 connecting the centers of the rotating shaft 3 and the reaction tube 7. When viewed in the axial direction of the rotating shaft 3, the reference direction of the reaction tube 7 is a direction determined on the basis of the direction in which light is emitted from the light emitters 12C disposed in the reaction tube 7 and the positional relationship between the light emitters 12C. The reference direction is, for example, the direction in which the straight line L32 extends. In the third modification, as illustrated in Fig. 13, the phase of the reference direction of the reaction tube 7 with respect to the straight line L1 is an angle θ4 between the straight line L1 and the straight line L32. Thus, as illustrated in Fig. 13, the positional relationship between the rotating shaft 3 and the four light emitters 12C of the light source 8C included in each catalyst reactor 6C is the same for all of the reaction tubes 7 of the catalyst reactors 6C.

According to the food processing device 100C of the third modification, each light source 8C includes the light emitting diodes. Therefore, the energy efficiency and durability of the light source 8C can be increased.

### (Fourth Modification)

A fourth modification will now be described.

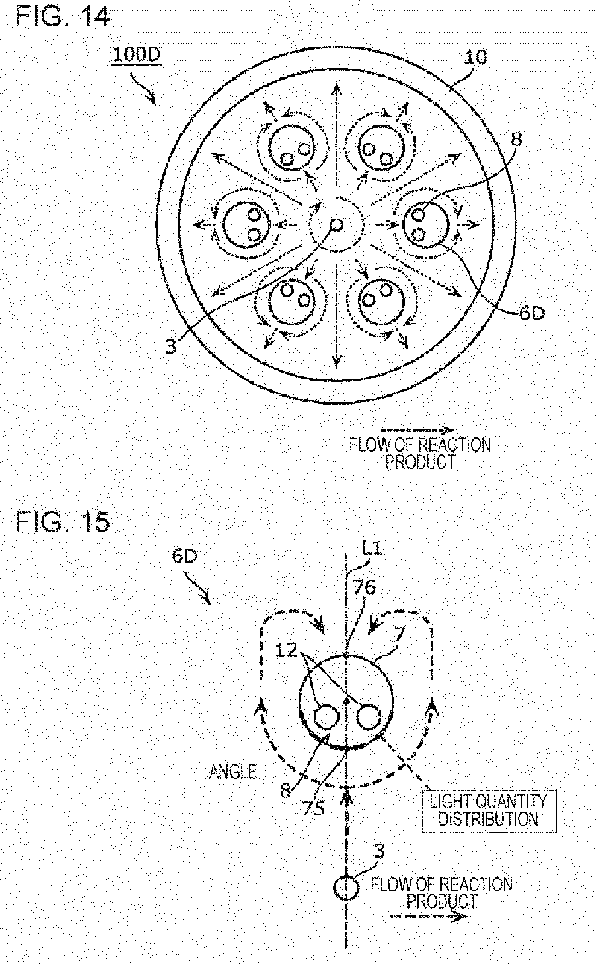

Fig. 14 is a sectional view of a food processing device according to a fourth modification that corresponds to the sectional view taken along line VI-VI in Fig. 1. Fig. 15 illustrates the relationship between the flow of the reaction product around each catalyst reactor and the light quantity distribution in Fig. 14.

In a food processing device 100D according to the fourth modification, when viewed in the axial direction of the rotating shaft 3, the light source 8 of each of the catalyst reactors 6D is disposed closer to a point 75 at a location close to the rotating shaft 3 on the inner wall of the reaction tube 7 of the catalyst reactor 6D than to a point 76 at a location far from the rotating shaft 3 on the inner wall of the reaction tube 7 of the catalyst reactor 6D. The point 75 is one of two intersecting points between the straight line L1 and the reaction tube 7 that is close to the rotating shaft 3, and the point 76 is the other one of the two intersecting points between the straight line L1 and the reaction tube 7 that is far from the rotating shaft 3.

Accordingly, a quantity of light from the light source 8 on the inner wall of the reaction tube 7 is greater in a region close to the rotating shaft 3 than in a region far from the rotating shaft 3. As a result, the amount of excitons that are generated is greater in the region close to the rotating shaft 3 than in the region far from the rotating shaft 3. The possibility of contact with the reaction product is higher in the region close to the rotating shaft 3 than in the region far from the rotating shaft 3. Therefore, when the light source 8 is disposed in the reaction tube 7 such that a large amount of excitons are generated in the region that is close to the rotating shaft 3 and in which the possibility of contact with the reaction product is high, the generated excitons quickly react with the reaction product. Thus, the reaction of the reaction product can be effectively promoted.

### (Fifth Modification)

A fifth modification will now be described.

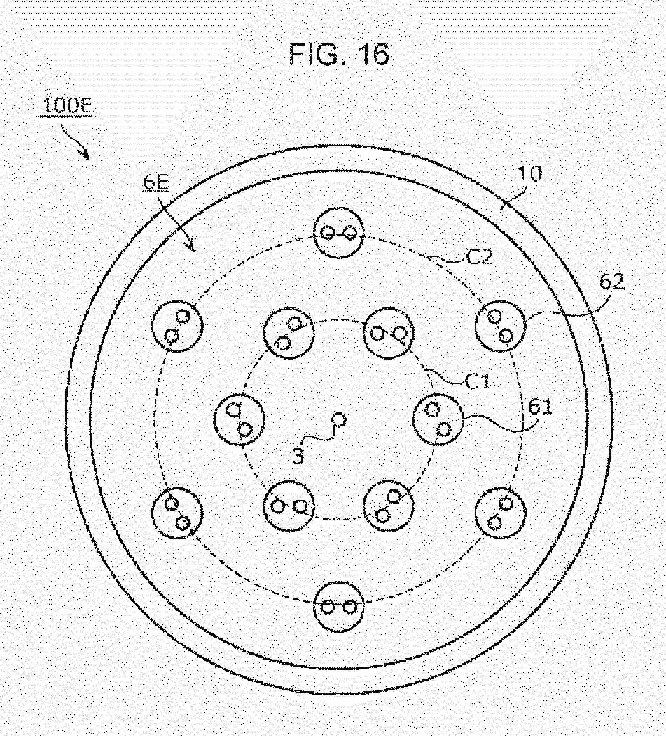

Fig. 16 is a sectional view of a food processing device according to a fifth modification that corresponds to the sectional view taken along line VI-VI in Fig. 1.

In a food processing device 100D according to a fifth modification, catalyst reactors 6E include first catalyst reactors 61 arranged around the rotating shaft 3 with intervals therebetween and second catalyst reactors 62 arranged around the first catalyst reactors 61 with intervals therebetween. More specifically, the first catalyst reactors 61 are arranged along a circle C1 having the rotating shaft 3 at the center with equal intervals therebetween. The second catalyst reactors 62 are arranged along a circle C2 having the rotating shaft 3 at the center and having a greater diameter than the circle C1 with equal intervals therebetween. Thus, a large number of catalyst reactors 6E can be arranged.

Similarly to the catalyst reactor 6 illustrated in Fig. 7, each of the first catalyst reactors 61 may have a first phase with respect to the straight line L1, and the first phase may be the angle θ1. In other words, the first catalyst reactors 61 have phases equal to each other and to the first phase. The phase of each first catalyst reactor 61 is a phase of the reference direction of the reaction tube 7 of the first catalyst reactor 61 with respect to the straight line L1 connecting the centers of the rotating shaft 3 and the reaction tube 7.

Similarly to the catalyst reactor 6 illustrated in Fig. 9, each of the second catalyst reactors 62 may have a second phase with respect to the straight line L1, and the second phase may be the angle θ2. In other words, the second catalyst reactors 61 have phases equal to each other and to the second phase. The phase of each second catalyst reactor 62 is a phase of the reference direction of the reaction tube 7 of the second catalyst reactor 62 with respect to the straight line L1 connecting the centers of the rotating shaft 3 and the reaction tube 7. The first phase and the second phase may differ from each other. The first phase and the second phase are not limited to this, and may be equal to each other.

Thus, each first catalyst reactor 61 causes reaction of the reaction product in the same manner, and each second catalyst reactor 62 causes reaction of the reaction product in the same manner.

### (Sixth Modification)

A food processing device according to a sixth modification will now be described.

The food processing device 100 includes a reaction vessel 1 having a space that receives a reaction product for a food product, the reaction product being in a liquid form; a stirrer 3 including a stirring body 4; and catalyst reactors 6 disposed in the space. The stirring body 4 is caused to stir the reaction product in the reaction vessel 1 by rotating a rotating shaft 3 of the stirring body 4. The catalyst reactors (e.g., the six catalyst reactors 6 illustrated in Fig. 6) include an i^{th} catalyst reactor (e.g., the catalyst reactor 6 illustrated in Fig. 2). The i^{th} catalyst reactor includes an i^{th} reaction tube (e.g., the reaction tube 7 illustrated in Fig. 2) and an i^{th} light source (e.g., the light source 8 illustrated in Fig. 2) disposed in the i^{th} reaction tube 7. Here, i is a natural number of greater than or equal to 1 and less than or equal to n, and n is a natural number of greater than or equal to 2. The i^{th} reaction tube 7 has an outer surface on which an i^{th} photocatalyst (e.g., the thin film 7b illustrated in Fig. 2) is provided. The i^{th} reaction tube 7 transmits light emitted from the i^{th} light source 8. The i^{th} light source 6 includes an i^{th} light emitter (e.g., one of the two light emitters 12 illustrated in Fig. 2 on the left in Fig. 2) and an (i+n)^{th} light emitter (e.g., one of the two light emitters 12 illustrated in Fig. 2 on the right in Fig. 2).

The i^{th} light emitter 7 has a side surface having a cylindrical shape with an i^{th} axis parallel to the rotating shaft 3 at the center (see Figs. 2 and 6). The (i+n)^{th} light emitter has a side surface having a cylindrical shape with an (i+n)^{th} axis parallel to the rotating shaft 3 at the center (see Figs. 2 and 6). The i^{th} reaction tube 7 has a side surface having a cylindrical shape with an (i+2n)^{th} axis parallel to the rotating shaft 3 at the center (see Figs. 2 and 6). The i^{th} catalyst reactor 6 corresponds to an i^{th} angle (e.g., θ1 illustrated in Fig. 7) between an i^{th} plane including the rotating shaft 3 and the (i+2n)^{th} axis (e.g., a plane perpendicular to the plane of Fig. 7 and including L1) and an (i+n)^{th} plane including the i^{th} axis and the (i+n)^{th} axis (e.g., a plane perpendicular to the plane of Fig. 7 and including L2). The i^{th} angle is defined as a clockwise angle from the i^{th} plane.

The distance between the rotating shaft 3 and the (i+2n)^{th} axis is an i^{th} distance. The first to n^{th} distances are equal to each other (e.g., the distances from the rotating shaft 3 to the six catalyst reactors 6 in Fig. 6 are equal to each other). The first to n^{th} angles are equal to each other (e.g., see Fig. 6).

Here, n may be 2.

### (Others)

The light source included in each catalyst reactor may be a U-shaped fluorescent lamp. The U-shaped fluorescent lamp includes two straight tube portions and a curved tube portion that connects the two straight tube portion. Since the U-shaped fluorescent lamp includes the two straight tube portions, the U-shaped fluorescent lamp can be regarded as including light emitters disposed at different positions when viewed in the axial direction of the rotating shaft 3.

Although the food processing devices according to one or more aspects of the present disclosure have been described with reference to the embodiments, the present disclosure is not limited to these embodiments. The scope of one or more aspects of the present disclosure may include embodiments obtained by applying various modifications conceivable by those skilled in the art to the above-described embodiments and embodiments obtained by combining constituent elements in different ones of the above-described embodiments as long as they do not depart from the spirit of the present disclosure.

### Industrial Applicability

An aspect of the present disclosure is applicable to, for example, a food processing device in which a photocatalyst is used to reform a raw material for a food product.

### Reference Signs List

1 reaction vessel
2 stirrer
3 rotating shaft
4 stirring body
5 lid
6, 6C, 6D, 6E catalyst reactor
7 reaction tube
7a glass base
7b thin film
7c bottom surface
7d opening portion
8, 8C light source
10 cooler
10a outer wall
11 temperature detector
12, 12C light emitter
13 controller
14 water supplier
15 discharger
16 fixer
17 fixing recess
18 sealing portion
61 first catalyst reactor
62 second catalyst reactor
71 to 76 point
100, 100A, 100B, 100C, 100D, 100E food processing device
C1, C2 circle
L1, L2, L3, L12, L22, L32, L33 straight line
θ1, θ2, θ3 angle

## Claims

1. A food processing device comprising:
a reaction vessel having a space that receives a reaction product for a food product, the reaction product being in a liquid form;
a stirrer including a stirring body that rotates to stir the reaction product in the reaction vessel; and
catalyst reactors,
wherein each of the catalyst reactors includes a reaction tube and a light source disposed in the reaction tube,
wherein the reaction tube has an outer surface on which a photocatalyst is provided,
wherein the reaction tube transmits light emitted from the light source,
wherein the catalyst reactors are arranged around a rotating shaft of the stirring body with intervals between the catalyst reactors,
wherein the light source includes light emitters disposed at different positions when viewed in an axial direction of the rotating shaft,
wherein, when viewed in the axial direction of the rotating shaft, the catalyst reactors have phases equal to each other, the phase of each of the catalyst reactors being a phase of a reference direction of the reaction tube of the catalyst reactor with respect to a straight line connecting centers of the rotating shaft and the reaction tube, and
wherein, when viewed in the axial direction of the rotating shaft, the reference direction of the reaction tube is a direction determined on the basis of a direction in which light is emitted from the light emitters disposed in the reaction tube and a positional relationship between the light emitters.

2. The food processing device according to claim 1,
wherein, when viewed in the axial direction of the rotating shaft, the light source of each of the catalyst reactors is disposed to emit light line-symmetrically about the straight line.

3. The food processing device according to claim 1 or 2,
wherein, when viewed in the axial direction of the rotating shaft, the light source of each of the catalyst reactors is disposed closer to a location close to the rotating shaft on an inner wall of the reaction tube of the catalyst reactor than to a location far from the rotating shaft on the inner wall of the reaction tube of the catalyst reactor.

4. The food processing device according to any one of claims 1 to 3,
wherein the catalyst reactors include:
first catalyst reactors arranged around the rotating shaft with intervals between the first catalyst reactors; and
second catalyst reactors arranged around the first catalyst reactors with intervals between the second catalyst reactors.

5. The food processing device according to claim 4,
wherein the first catalyst reactors have phases equal to each other and to a first phase, the phase of each of the first catalyst reactors being a phase of the reference direction of the reaction tube of the first catalyst reactor with respect to the straight line connecting the centers of the rotating shaft and the reaction tube,
wherein the second catalyst reactors have phases equal to each other and to a second phase, the phase of each of the second catalyst reactors being a phase of the reference direction of the reaction tube of the second catalyst reactor with respect to the straight line connecting the centers of the rotating shaft and the reaction tube, and
wherein the first phase and the second phase differ from each other.

6. The food processing device according to any one of claims 1 to 5,
wherein the light source is a fluorescent lamp including two glass tube bodies disposed to extend in a length direction of the reaction tube.

7. The food processing device according to any one of claims 1 to 5,
wherein the light source includes light emission units, each of which includes light emitting diodes arranged in a length direction of the reaction tube, and
wherein each of the light emission units is disposed to emit light toward an inner wall of the reaction tube.

8. The food processing device according to any one of claims 1 to 7, further comprising:
a cooler that is disposed to surround the catalyst reactors and cools the reaction product in the reaction vessel.

9. The food processing device according to any one of claims 1 to 8,
wherein each of the catalyst reactors includes a fixer disposed between the light source and a bottom portion of the reaction tube, the fixer fixing the light source to the bottom portion of the reaction tube.

10. A food processing device comprising:
a reaction vessel having a space that receives a reaction product for a food product, the reaction product being in a liquid form;
a stirrer including a stirring body that rotates to stir the reaction product in the reaction vessel; and
catalyst reactors,
wherein each of the catalyst reactors includes a reaction tube and a light source disposed in the reaction tube,
wherein the reaction tube has an outer surface on which a photocatalyst is provided,
wherein the reaction tube transmits light emitted from the light source,
wherein the catalyst reactors are arranged around a rotating shaft of the stirring body with intervals between the catalyst reactors,
wherein the light source includes light emitters disposed at different positions when viewed in an axial direction of the rotating shaft, and
wherein, when viewed in the axial direction of the rotating shaft, the light source of each of the catalyst reactors is disposed to emit light line-symmetrically about a straight line connecting centers of the rotating shaft and the reaction tube.
